# EUROPÄISCHE PATENTANMELDUNG

(11) **EP 2 336 375 A1**
(43) Veröffentlichungstag der Anmeldung: **22.06.2011**
(21) Anmeldenummer: 09816503.8
(22) Anmeldetag: 08.09.2009
(51) Int. Cl.: C22B 11/00, C22B 1/04, C22B 3/10

(54) **VERFAHREN ZUR GEWINNUNG VON EDELMETALLEN**

(30) Priorität: 29.09.2008 RU 2008138812
(71) Anmelder: Zakrytoe Akcionernoe Obshestvo "Uralkaliy Technologiya", Permsky Krai 618426 (RU)
(72) Erfinder: Sinegribov, Viktor Andreevich, Moscow 125413 (RU); Smetannikov, Andrei Filippovich, Perm 614013 (RU); Yudina, Tatyana Borisovna, Moscow 115583 (RU); Novikov, Pavel Yurievich, Moscow 121471 (RU); Logvinenko, Izabella Alekseevna, Moscow 115409 (RU); Krasnoshtein, Arkadiy Evgenievich, Perm 614039 (RU)
(74) Vertreter: Jeck, Anton
(86) Internationale Anmeldenummer: PCT/RU2009/000454
(87) Internationale Veröffentlichungsnummer: WO 2010/036142

(57) **Zusammenfassung**

Die Erfindung betrifft ein Verfahren zur Ausbringung von Edelmetallen aus Mineralrohstoffen, welche Chloride aus Alkali- und Erdalkalimetallen aufweisen, einschließlich des Brennens, der Auslaugung des Abbrands und der Sorption der Edelmetalle. Dabei ist vorgesehen, dass als Mineralrohstoff ein Sammelkonzentrat verwendet wird, welches bei einer Aufbereitung der Ton- und Salzabfälle, der Schlämme von Kaliwerken, mit einem Chloridgehalt von 15 - 30 % hergestellt wird, dass es danach granuliert wird, dass die Granulate bei einer Temperatur von 500 - 950 °C gebrannt werden und dass die Edelmetalle danach aus dem Abbrand mittels einer Salzsäurelösung ausgelaugt und sorbiert werden, dann wird die Ausbringung der Edelmetalle ohne Verwendung giftiger Stoffe wesentlich erhöht.

## Beschreibung

Die Erfindung betrifft ein Verfahren zur Ausbringung von Edelmetallen aus Mineralrohstoffen nach dem Oberbegriff des Anspruchs.

Die Erfindung kann für die Ausbringung von Edelmetallen (Platin, Palladium, Gold usw.) aus unterschiedlichen Arten von Mineralrohstoffen, die Chloride von Alkali- und Erdalkalimetallen aufweisen, z. B. aus Schlämmen der Kaliwerke, verwendet werden.

Aus dem Patent RU 2132398, IPC⁶ C 22 B7/00, (veröffentlicht am 27.06.1999) ist ein Verarbeitungsverfahren für Schlämme von Kaliwerken bekannt. Nach diesem Verfahren wird ein Abwaschen von goldhaltigen Schlämmen zur Salzentfernung vorgenommen. Infolge des Abwaschens wird Salzwasser entfernt. Danach werden die Schlämme mit Süßwasser ergänzt. Durch die gebildete Trübe wird dann das Chlorgas durchgelassen. Dabei wird eine Chlorierung so durchgeführt, dass die Konzentration von aktivem Chlor in der Laugenlösung im Bereich von 0,3 - 2,0 g/L variiert. Nach Abschluss des Auslaugungsvorgangs wird Gold mittels Sorption ausgebracht.

Die Mängel des Verfahrens bestehen darin, dass die Chloride sorgfältig abgewaschen werden müssen und dass zur Ausbringung von Gold elementares Chlor - ein sehr starker Giftstoff - verwendet werden muss.

Ein weiterer Stand der Technik ist ein Verfahren zur Ausbringung von Edelmetallen aus Mineralrohstoffen, die Chloride von Alkali- und Erdalkalimetallen aufweisen (s. Patent RU 2291907, veröffentlicht 2006.01). Gemäß diesem Verfahren werden aus dem Rohstoff überflüssige Chloride ausgewaschen, bis ihr Gehalt in dem zu behandelnden Material 7 - 13 % beträgt. Die Trübe wird verdickt. Das verdickte Produkt wird getrocknet und bei einer Temperatur von 600 - 700 °C geglüht. Danach werden die Edelmetalle aus dem Abbrand mit einer verdünnten Königswasserlösung ausgelaugt. Die Edelmetalle werden aus der erzeugten Trübe sorbiert.

Der Mangel dieses Verfahrens besteht darin, dass die Edelmetalle aus den Schlämmen nicht vollständig ausgebracht werden. Das liegt daran, dass Palladium zusammen mit Auswaschwasser wegen der Lösbarkeit seines Chlorids verloren geht, wenn die überflüssigen Chloride der Alkali- und Erdalkalimetalle beim Abwaschen der Schlämme mit Wasser entfernt werden.

Es ist Aufgabe der Erfindung, die Mängel der bekannten Verfahren zu beseitigen. Die gestellte Aufgabe wird mit den Merkmalen des Anspruchs gelöst.

Das nach dem neuen Verfahren erreichbare technische Ergebnis besteht darin, dass die umfassende Ausbringung von Edelmetallen aus den verarbeiteten Materialien erhöht wird. Das wird dadurch erreicht, dass auf ein überflüssiges Abwaschen der Chloride der Alkali- und Erdalkalimetalle verzichtet wird und dass die edelmetallhaltigen Verbindungen mit Chloriden der Alkalimetalle verschmolzen werden. Dabei werden die in Salzsäure lösbaren Verbindungen von Eisen, Aluminium und Silizium gebildet. Folglich wird jener Teil der Edelmetalle aufgedeckt, welcher die feinste Fraktion in den genannten Materialien darstellt.

Das genannte technische Ergebnis gemäß dem Verfahren zur Ausbringung der Edelmetalle aus den Mineralrohstoffen wird folgenderweise erreicht:

Der Mineralrohstoff enthält Chloride von Alkali- und Erdalkalimetallen. Das Verfahren umfasst ein Glühen, eine Auslaugung des Abbrands und eine Sorption der Edelmetalle. Gemäß der Erfindung wird als Mineralrohstoff ein Sammelkonzentrat verwendet. Das Sammelkonzentrat wird bei der Aufbereitung der Ton- und Salzabfälle, d. h. der Schlämme von Kaliwerken, mit einem Chloridgehalt von 15 bis 30 % gewonnen. Das Sammelkonzentrat wird granuliert. Danach werden die Granulate bei einer Temperatur von 500 - 950 °C gebrannt. Die Edelmetalle werden nachher aus dem Abbrand mittels einer Salzsäurelösung ausgelaugt und sorbiert.

Das kennzeichnende Merkmal des neuen Verfahrens gegenüber dem bekannten nächsten Stand der Technik besteht darin, dass als Mineralrohstoff ein Sammelkonzentrat eingesetzt wird. Das Sammelkonzentrat wird bei der Aufbereitung der Ton- und Salzabfälle, der Schlämme von Kaliwerken, mit einem Chloridgehalt von 15 bis 30 % hergestellt. Es wird danach granuliert. Die Granulate werden bei einer Temperatur von 500 - 950 °C gebrannt. Danach werden die Edelmetalle aus dem Abbrand mittels einer Salzsäurelösung ausgelaugt und sorbiert.

Dank dem Vorhandensein dieser Merkmale wurde ein Verfahren entwickelt, welches eine komplexe Ausbringung der Edelmetalle ermöglicht.

Das Verfahren wird in folgender Weise ausgeführt:

Das Sammelkonzentrat wurde bei der Aufbereitung von Ton- und Salzabfällen hergestellt. Dafür werden die Schlämme von den Werken verwendet, die kalihaltige Erze und Steinsalz verarbeiten. Das Sammelkonzentrat stellt eine eingedickte Trübe mit einem Verhältnis fest : flüssig =1: 1 dar. Der unlösliche Rückstand wird ohne weiteres Abwaschen der Chloride ausgeschieden und granuliert. Die hergestellten Granulate werden getrocknet und bei einer Temperatur von 500 - 950 °C gebrannt. Dabei erfolgt ein Sintern der Schlammmineralien mit den Chloriden der Alkalimetalle. Danach erfolgt eine Auslaugung der Edelmetalle aus dem Abbrand mittels einer Salzsäurelösung. Die Edelmetalle werden aus der erzeugten Trübe mittels Sorption, z. B. durch Harz AM-2B, ausgebracht.

### Beispiel 1

Es wurden folgende Versuche vorgenommen:
- Brennen des granulierten unlöslichen Rückstands mit einem Chlorgehalt von 13,5 - 13,8% bei einer Temperaturen von 500 - 900°C,
- Auslaugung der Abbrände mit einer 3,8-Normallösung von Königswasser bei einem Verhältnis fest : flüssig = 1 : 4 und einer Temperatur von 65 - 70 °C im Laufe von 4 Stunden,
- Sorption der Edelmetalle durch einen Anionenaustauscher AM-2B,
- ihre Desorption vom Harz und einer
- Analyse der Desorbate in Bezug auf den Edelmetallgehalt.

Aus der Tabelle 1 geht hervor, dass die Ausbringung von Palladium innerhalb des Brenntemperaturbereichs von 500 - 900 °C praktisch gleichmäßig von 1,78 auf 4,82 g/t des entsalzten Schlamms erhöht wird.

**Tabelle 1**

| | | | | |
|---|---|---|---|---|
| Ausbringung der Edelmetalle aus einem unlöslichen Rückstand mit einem Chlorgehalt von 13,5 - 13,8 % | | | | |

| T_{Br.,} °C | Ausgebracht, g/t des entsalzten Schlamms | | | |
|---|---|---|---|---|
| | Pd | Pt | Au | Ag |
| 500 | 1,78 | <0,015 | 0,26 | 4,98 |
| 600 | 2,65 | 0,010 | 0,20 | 4,80 |
| 700 | 3,74 | 0,095 | 0,54 | 3,60 |
| 800 | 3,03 | <0,017 | 0,24 | 45,4 |
| 900 | 4,82 | 0,156 | 0,18 | 24,1 |

### Beispiel 2

Es wurden Versuche durchgeführt, die folgende Schritte umfassten:
- Brennen eines granulierten unlöslichen Rückstands der gleichen Charge wie im Beispiel 1 mit einem Chlorgehalt von 18,4 % bei einer Temperatur von 500 - 900 °C und
- Verarbeitung der Abbrände unter den gleichen Bedingungen wie im Beispiel 1 (Tabelle 2).

**Tabelle 2**

| Ausbringung der Edelmetalle aus einem unlöslichen Rückstand mit einem Chlorgehalt von 18,4% | | | | |
|---|---|---|---|---|
| T_{Br.,} °C | Ausgebracht, g/t des entsalzten Schlamms | | | |
| | Pd | Pt | Au | Ag |
| 500 | 1,74 | <0,015 | 0,076 | 0,76 |
| 600 | 3,24 | 0,024 | 0,127 | 0,98 |
| 700 | 4,67 | 0,112 | 0,616 | 7,33 |
| 800 | 3,79 | 0,062 | 0,150 | 1,95 |
| 900 | 11,8 | 0,264 | 3,20 | 3,42 |

Aus der Tabelle geht hervor, dass, ähnlich wie im Beispiel 1, die Ausbringung von Palladium praktisch gleichmäßig innerhalb des Brenntemperaturbereichs von 700 - 800 °C erhöht wird. Bei Temperaturen über 800 °C steigt die Ausbringung akut an, wobei bei 900 °C 11,8 g/t des entsalzten Schlammes erreicht werden. Gleichzeitig nimmt die Ausbringung von Platin und Gold akut zu.

Es sei bemerkt, dass der überflüssige Grad des Abwaschens des unlöslichen Rückstands vom Rückgang des Palladium- und Platingehalts im hergestellten Produkt begleitet wird.

### Beispiel 3

**Tabelle 3**

| Auslaugung der Abbrände durch die Mischung HCl+HNO₃ | | | | |
|---|---|---|---|---|
| Größe des Abbrandes - 2 mm | | | | |
| Kennwerte der Auslaugung: fest: flüssig =1 : 4 | | | | |
| Temperatur - 90 °C | | | | |
| Zeit-4 4 Stunden | | | | |
| Gehalt an Cl⁻, % | Ausgebracht, g/t von entsalztem, unlöslichem Rückstand | | | |
| | Pd | Pt | Au | Ag |
| 11,8 | 1,71 | 0,17 | 0,06 | 0,72 |
| 14,1 | 1,8 | 0,23 | 0,04 | 0,73 |
| 15,1 | 2,3 | 0,13 | 0,29 | 11,3 |
| 15,4 | 4,66 | 0,73 | 0,10 | 1,62 |
| 16,2 | 4,89 | 0,76 | 0,27 | 3,84 |

Die Charge des Unlöslichen wurde in 5 Teile aufgeteilt. Die Chloride wurden aus diesen Teilen in unterschiedlichem Maße ausgewaschen. Danach wurde der unlösliche Rückstand von der überflüssigen Lösung getrennt und granuliert. Die hergestellten Granulate (chargenweise á 20 kg) wurden bei einer Temperatur von 850 °C gebrannt. Die Abbrände wurden unter den gleichen Bedingungen wie in Beispiel 1 (Tabelle 3) verarbeitet.

Aus der Tabelle 3 geht hervor, dass das überflüssige Abwaschen des unlöslichen Rückstands von der bedeutenden Abnahme des Palladiumgehalts im hergestellten Produkt und dementsprechend von der Verringerung seiner Ausbringung begleitet wird.

### Beispiel 4

Die Proben des ähnlich wie in den Beispielen 1 und 2 hergestellten granulierten, unlöslichen Rückstands wurden bei einer Temperatur von 850 °C gebrannt. Die Abbrände wurden in zwei Teile geteilt. Die Hälfte der Abbrände wurde unter den gleichen Bedingungen wie in Beispiel 1 verarbeitet. Die Parallelproben wurden mit einer 10%igen Salzsäurelösung ausgelaugt, wobei alle anderen Kennwerte erhalten bleiben.

**Tabelle 4**

| Vergleichsangaben über die Auslaugung der Metalle mit Säuren | | | | | |
|---|---|---|---|---|---|
| Einbrenntemperatur-850°C | | | | | |
| Größe der Briketts - 8 mm | | | | | |
| Probe | Säure | Ausgebracht, g/t des entsalzten, unlöslichen Rückstands | | | |
| | | Pd | Pt | Au | Ag |
| 1 | HCl | **3,57** | <0,014 | 0,030 | 0,63 |
| | HCl+HNO₃ | 0,90 | 0,250 | 0,021 | 0,48 |
| 2 | HCl | **9,63** | 0,370 | 1,86 | 2,76 |
| | HCl+HNO₃ | 7,56 | <0,015 | 0,05 | 0,59 |
| 3 | HCl | **1,59** | 0,018 | 0,210 | 0,07 |
| | HCl+HNO₃ | 1,13 | 0,890 | 0,086 | 1,00 |
| 4 | HCl | **2,15** | <0,017 | 0,084 | 0,08 |
| | HCl+HNO₃ | 1,26 | 0,690 | 0,164 | 0,55 |
| 5 | HCl | **2,44** | <0,016 | 0,220 | 0,08 |
| | HCl+HNO₃ | 1,05 | <0,015 | 0,071 | 1,39 |

Aus der Tabelle 4 geht hervor, dass in allen Fällen die Ausbringung von Palladium unter Einsatz von Salzsäure wesentlich höher ist. Das Palladium- und das Platinmetall werden infolge einer Zersetzung der Chloride dieser Metalle bei einer Temperatur über 600 °C gebildet. Um das Palladium- und das Platinmetall aufzulösen, ist ein Oxydans erforderlich. Als solches Oxydans dient ein dreiwertiges Eisen, welches bei der Auslaugung des Abbrands in die Lösung wandert (Tabelle 5).

**Tabelle 5**

| Ausbringung von Eisen und Aluminium in die Lösung | | |
|---|---|---|
| T_{Br.}, °C | Ausgebracht, kg/t des entsalzten, unlöslichen Rückstands | |
| | Fe | Al |
| 500 | 7,70 | 3,22 |
| 600 | 8,56 | 4,06 |
| 700 | 7,39 | 5,02 |
| 800 | 9,59 | 8,54 |
| 900 | 8,95 | 9,24 |

Der technische Nutzeffekt des vorgeschlagenen Verfahrens zur Ausbringung der Edelmetalle aus Mineralrohstoffen, die Chloride von Alkali- und Erdalkalimetallen enthalten, besteht darin, dass bei der Anwendung dieses Verfahrens eine maximale und komplexe (umfassende) Ausbringung von Metallen der Platingruppe, Gold und Silber aus den genannten Mineralrohstoffen ermöglicht wird. Der Verarbeitungsablauf dieser Mineralrohstoffe wird vereinfacht. Dank dem Verzicht auf die Verfahrensschritte im Zusammenhang mit dem Abwaschen der Chloride wird der Wasserverbrauch verringert. Durch den Verzicht auf die Anwendung von Salpetersäure werden die verfahrenstechnischen Bedingungen bei der Verarbeitung des Abbrands vereinfacht. Dieses Verfahren trägt auch zur Verbesserung der Umweltverhältnisse bei.

## Patentansprüche

1. Verfahren zur Ausbringung von Edelmetallen aus Mineralrohstoffen, welche Chloride von Alkali- und Erdalkalimetallen aufweisen, einschließlich des Brennens, der Auslaugung des Abbrands und der Sorption der Edelmetalle,
**dadurch gekennzeichnet,**
**dass** als Mineralrohstoff ein Sammelkonzentrat verwendet wird, welches bei einer Aufbereitung der Ton- und Salzabfälle, der Schlämme von Kaliwerken, mit einem Chloridgehalt von 15 bis 30 % hergestellt wird,
**dass** es danach granuliert wird,
**dass** die Granulate bei einer Temperatur von 500 - 950°C gebrannt werden und
**dass** die Edelmetalle danach aus dem Abbrand mittels einer Salzsäurelösung ausgelaugt und sorbiert werden.
